# EUROPÄISCHE PATENTANMELDUNG

(11) **EP 1 216 812 A1**
(43) Veröffentlichungstag der Anmeldung: **26.06.2002**
(21) Anmeldenummer: 01129582.1
(22) Anmeldetag: 12.12.2001
(51) Int. Cl.: B29C 69/00, B29C 49/04, B29C 49/20, B29C 49/22, B29C 65/02, B60K 15/03, B65D 8/16

(54) **Verfahren zur Herstellung von Kunststoffhohlkörpern**

(30) Priorität: 22.12.2000 DE 10064801
(71) Anmelder: Basell Polyolefine GmbH, 77694 Kehl (DE)
(72) Erfinder: Wüst, Andreas, 64673 Zwingenberg (DE)

(57) **Zusammenfassung**

Die vorliegende Erfindung betrifft ein Verfahren zur Herstellung von Kunststoffhohlkörpern, welches die folgenden Schritte umfaßt:
a) Formen eines Blasformteiles in einer Blasform- und/oder Coextrusionsblasformanlage, wobei die durch zwei Werkzeugkonturen (1) und (2) gebildete Blasformkavität (3) so gestaltet ist, daß sie im wesentlichen der Außenkontur des herzustellenden Kunststoffhohlkörpers entspricht und zusätzlich eine umfängliche, vorzugsweise mittig zur Quetschkante angeordnete Ein- und/oder Ausstülpung (4) aufweist;
b) Durchtrennen der Ein- und/oder Ausstülpung unter Erhalt von wenigstens zwei Halbzeugen;
c) gegebenenfalls vor dem Verbinden der Halbzeuge zu einem Hohlkörper Anbringen von Einbauteilen an der Innenseite der Halbzeuge;
d) Verbinden der Halbzeuge zu einem Hohlkörper, gegebenenfalls durch Verschweißen oder Verkleben.

## Beschreibung

Die vorliegende Erfindung betrifft ein Verfahren zur Herstellung von Kunststoffhohlkörpern in einer Blasform- oder Coextrusionsblasformanlage. Ferner betrifft die vorliegende Erfindung nach dem vorgenannten Verfahren herstellbare Kunststoffhohlkörper sowie deren Verwendung beispielsweise als Kunststoffkraftstoffbehälter in Kraftfahrzeugen.

Für die Lagerung und den Transport flüssiger Gefahrstoffe sind Kunststoffhohlkörper seit langem bekannt. Insbesondere im Fahrzeugbau haben Kunststoffhohlkörper in Form von Kraftstofftanks, die früher üblichen Tanks aus metallischen Werkstoffen nahezu vollständig verdrängt. Aber auch tragbare bzw. nicht ortsfeste Behälter aller Art, beispielsweise Benzinkanister, Kunststoffflaschen, -fässer und -container für brennbare Flüssigkeiten, Gefahrstoffe und dergleichen werden heute fast ausschließlich aus Kunststoffen hergestellt. Der besondere Vorteil von Kunststoffbehältern und Tanks liegt vor allem im geringeren Gewicht-/Volumenverhältnis und der Vermeidung von Korrosionsproblemen sowie der kostengünstigen Herstellung.

Für die Herstellung von Kunststoffhohlkörpern sind verschiedene Verfahren einsetzbar. Neben dem sogenannten Rotationssintern wird vor allem das Blasformen, einschließlich Coextrusionsblasformen, in großem Maßstab in der Serienproduktion angewandt.

Aufgrund weltweit bestehender gesetzlicher Anforderungen zur Reduktion ozonbildender Emissionen, wie beispielsweise Kraftstoffemissionen müssen Kunststoffkraftstoffbehälter (KKB) in allen Fahrzeugen gegen den Austritt von Kraftstoffen im Stillstand und Betrieb gesichert sein. Sofern der zur Herstellung eines Kunststoffkraftstoffbehälters verwendete Kunststoff nicht bereits inhärente Barriereeigenschaften aufweist, müssen zusätzliche Maßnahmen zur Permeationsminderung getroffen werden.

Die häufig zur Herstellung der Kunststoffkraftstoffbehälter verwendeten Polyolefine weisen eine nur geringe Barrierewirkung gegenüber der Permeation leicht flüchtiger, unpolarer Stoffe auf. Die Sperreigenschaften von Kunststoffkraftstoffbehältern aus beispielsweise Polyethylen lassen sich unter anderem durch Fluorierung (in-line oder off-line), Lackierung bzw. Coating, Plasmapolymerisation, Blends (Selar®-Verfahren) oder Coextrusionsverfahren (Einbau diverser Sperrpolymere im Mehrschichtverbund) erheblich verbessern.

Neben dem Coextrusionsblasformen haben nur noch die Fluorierung und das Selar®-Verfahren als Barriereverfahren technische Bedeutung erlangt. Im Stand der Technik bekannte Fluorierungsverfahren sind im weitesten Sinne Beschichtungsverfahren. Ein prinzipieller Nachteil aller Beschichtungsverfahren ist, daß die Sperrschicht bzw. die Sperrschichten notwendigerweise auf der inneren und/oder äußeren Behälteroberfläche aufgetragen werden und somit den Umgebungseinflüssen ungeschützt ausgesetzt sind. So kann es mit der Zeit zu einem Ablösen oder auch zu einer chemischen Veränderung der Sperrschicht kommen, wodurch die Barriereeigenschaften signifikant beeinträchtigt werden. Die strengen gesetzlichen Anforderungen zur Langzeitstabilität der Sperrwirkung bedingen, daß in der Zukunft Beschichtungsverfahren wie etwa die Fluorierung zunehmend an Bedeutung verlieren werden. Diese Entwicklung wird zudem dadurch verstärkt, daß zur Erfüllung der gesetzlichen Anforderungen hinsichtlich der Vermeidung von Kraftstoffemissionen aus dem Kraftstoffsystem vermehrt Teile im Inneren des Tanks integriert werden müssen. Vor dem Beschichtungsprozeß können Teile nur dann eingebaut werden, wenn die Einbauteile bei dem Beschichtungsverfahren nicht beschädigt werden. Erfolgt die Beschichtung vor dem Einbau etwaiger Teile, muß davon ausgegangen werden, daß an den Befestigungsstellen (Schweißstellen) im Tank die Beschichtung beschädigt wird.

Aus den vorgenannten Gründen konzentrieren sich heutige Entwicklungen auf die Herstellung und den Aufbau von Mehrschichtsystemen. Beispielsweise wird das Verfahren der Mehrschicht-Coextrusion zur Einbringung von Sperrschichten in die Behälterwand eingesetzt. Dabei werden Sperrpolymere über Haftvermittler in eine tragende Polymermatrix eingebettet. Üblicherweise befindet sich das Sperrpolymere etwa in der Mitte der Behälterwand, wodurch zum einen die bei mechanischer Belastung auftretenden Biegespannungen in den zumeist spröderen Sperrpolymeren minimiert werden und zum anderen das Sperrpolymere vor Umgebungseinflüssen ― insbesondere Wasser ― durch das Matrixmaterial, wie etwa Polyethylen, geschützt ist.

Ein für den Aufbau mehrschichtiger Hohlkörper verwendetes Verfahren ist das bereits erwähnte Coextrusionsblasformen. Das Blasformen bzw. das Coextrusionsblasformen ist eine verbreitete Technik, die jedoch den Nachteil aufweist, daß die Integration von Bauteilen, also beispielsweise Komponenten des Kraftstoffsystems, nach der Herstellung des Kunststoffhohlkörpers nicht möglich oder mit großen Schwierigkeiten verbunden ist.

Bei einem weiteren im Stand der Technik bekannten Herstellungsverfahren, dem sogenannten Thermoformverfahren bzw. Twin-Sheet-Verfahren werden zunächst zwei Halbschalen durch Tiefziehen entsprechender Plattenhalbzeuge gefertigt und diese in einem zweiten Verfahrensschritt miteinander verschweißt. Ein grundlegender Nachteil dieses Verfahrens besteht allerdings unter anderem in der nur bedingt kontrollierbaren Wanddickenverteilung in den Tankhalbschalen. Die Wanddickenverteilung und somit die Sperrschichtdickenverteilung lassen sich nur unzureichend kontrollieren, da die Plattenhalbzeuge eine gleichmäßige Wanddicke besitzen, so daß je nach Reckverhältnissen beim Tiefziehen die Wanddicke bzw. die Sperrschichtdicke lokal stark ausgedünnt werden kann.

Ein weiteres Verfahren zur Herstellung von mehrschichtigen Kunststoffhohlkörpern beruht auf den im Stand der Technik bekannten Spritzgußverfahren. Ein erheblicher Nachteil dieses Verfahrens ist darin zu sehen, daß zum Aufbau mehrschichtiger Schalen entweder dickwandige mehrschichtige, in einem gesonderten Prozeß herzustellende Folien hinterspritzt werden oder aber dünnere Folien, die ebenso gesondert herzustellen sind, in zwei aufeinanderfolgenden Schritten beidseitig hinterspritzt werden. In jedem Falle sind daher prinzipiell mehrere Prozeßschritte, ein erheblicher apparativer Aufwand und infolge dessen ein hoher Zeit- und Kostenaufwand für das Herstellen mehrschichtiger Kunststoffhohlkörper erforderlich.

In der DE 198 14 314 wird ein sogenanntes Schmelzpreßverfahren beschrieben. Hierbei wird ein coextrudierter Vorformling, beispielsweise als Schlauch aus einer Blasformanlage, in ein Werkzeug eingelegt und mit einem Stempel oder Negativwerkzeug zu einer Halbschale verpreßt. Nachteilig ist, daß beim Verpressen eine starke Schmelzquetschströmung parallel zur Werkzeugoberfläche auftritt, wodurch zwar die Gesamtwanddicke gut über die geometrischen Maße von Werkzeug und Stempel festgelegt werden kann, jedoch die zumeist leicht fließende Schmelze der Sperrpolymere örtlich ausgedünnt wird. Dies wiederum bewirkt eine über den Kunststoffhohlkörper ungleichmäßige Barrierewirkung.

Die vorhergehenden Ausführungen zeigen, daß die im Stand der Technik bekannten Verfahren zur Herstellung von Kunststoffhohlkörpern eine Reihe gravierender Nachteile aufweisen. Es besteht daher ein starkes Bedürfnis, ein Verfahren zur Herstellung von Kunststoffhohlkörpern zur Verfügung zu stellen, welches die vorgenannten Nachteile des Standes der Technik vermeidet. Der vorliegenden Erfindung lag außerdem die Aufgabe zugrunde, ein verbessertes Verfahren zu entwickeln, bei dem die bereits existierenden und in der Industrie weit verbreiteten Coextrusionsblasformanlagen bzw. Blasformanlagen weiterhin eingesetzt werden können.

Weitere Aufgaben ergeben sich aus der nachfolgenden Beschreibung der Erfindung.

Die erfindungsgemäße Lösung der verfahrensbezogenen Aufgaben beruht auf den Merkmalen des Anspruches 1.

Vorteilhafte Ausgestaltungen des erfindungsgemäßen Verfahrens sind in den Verfahrensunteransprüchen definiert.

Erfindungsgemäß wird ein Verfahren zur Herstellung von Kunststoffhohlkörpern bereitgestellt, welches die folgenden Schritte umfaßt:
a) Formen eines Blasformteiles in einer Blasform- und/oder Coextrusionsblasformanlage, wobei die durch zwei Werkzeugkonturen gebildete Blasformkavität so gestaltet ist, daß sie im wesentlichen der Außenkontur des herzustellenden Kunststoffhohlkörpers entspricht und zusätzlich eine umfängliche, vorzugsweise mittig zur Quetschkante angeordnete Ein- und/oder Ausstülpung aufweist;
b) Durchtrennen der Ein- und/oder Ausstülpung unter Erhalt von wenigstens zwei Halbzeugen;
c) gegebenenfalls vor dem Verbinden der Halbzeuge zu einem Hohlkörper Anbringen von Einbauteilen an der Innenseite der Halbzeuge;
d) Verbinden der Halbzeuge zu einem Hohlkörper, gegebenenfalls durch Verschweißen oder Verkleben.

Es wurde gefunden, daß für das erfindungsgemäße Verfahren zur Herstellung von Kunststoffhohlkörpern die Nachteile der im Stand der Technik bekannten Verfahren vermieden werden.

Das Prinzip des erfindungsgemäßen Verfahrens zur Herstellung von Kunststoffhohlkörpern besteht darin, daß zunächst in einer üblichen Blasform- oder Coextrusionsblasformanlage in herkömmlicher Art und Weise ein Blasformteil hergestellt wird. Es ist erfindungsgemäß vorgesehen, daß die durch zwei Werkzeugkonturen gebildete Blasformkavität so gestaltet ist, daß sie im wesentlichen der Außenkontur des herzustellenden Kunststoffhohlkörpers bzw. Kunststofftanks entspricht. Es ist von erfindungswesentlicher Bedeutung, daß die vorbeschriebene Blasformkavität bzw. das für das erfindungsgemäße Verfahren verwendete Blasformwerkzeug zusätzlich eine umfängliche, vorzugsweise mittig zur Quetschkante angeordnete Ein- und/oder Ausstülpung aufweist. "Umfänglich" im Sinne der vorliegenden Erfindung bedeutet, daß die Ein- und/oder Ausstülpung vorzugsweise um das gesamte Blasformteil bzw. den Kunststoffhohlkörper herum angeordnet ist. Die im Vergleich zu herkömmlichen Blasformwerkzeugen neue, modifizierte Gestaltung der Werkzeugkontaktbereiche führt somit zum Erhalt eines Kunststoffhohlkörpers, welcher eine um den Behälter herum angeordnete Ein- und/oder Ausstülpung bzw. Ein- oder Ausbuchtung aufweist.

Im zweiten Schritt des erfindungsgemäßen Verfahrens wird die vorbeschriebene Ein- und/oder Ausstülpung, vorzugsweise in senkrechter Richtung zu der vorgenannten Ein- und/oder Ausstülpung, durchtrennt. Durch das Durchtrennen, also beispielsweise Abschneiden, Abschleifen oder Stanzen der den Kunststoffhohlkörper umlaufenden Ein- und/oder Ausstülpung werden zwei Halbschalen bzw. Halbzeuge erhalten. Im letzten Schritt des erfindungsgemäßen Verfahrens werden die erhaltenen Halbschalen zu einem Hohlkörper verklebt und/oder verschweißt.

Ein weiterer Gegenstand der vorliegenden Erfindung ist ein Kunststoffhohlkörper, welcher nach dem vorbeschriebenen Verfahren herstellbar ist. Es ist erfindungsgemäß vorgesehen, daß die nach dem erfindungsgemäßen Verfahren hergestellten Kunststoffhohlkörper vorzugsweise als Kunststoffkraftstoffbehälter in Kraftfahrzeugen, aber auch als Benzinkanister, Kunststofftanks zur Lagerung und zum Transport von Heizöl, Diesel und Lösemitteln, Transportbehälter auf Nutzfahrzeugen, beispielsweise für landwirtschaftliche Spritzmittel, Lösemittelbehälter, Kunststoffflaschen und dergleichen verwendet werden.

Ein weiterer Gegenstand der vorliegenden Erfindung ist ein erfindungsgemäß gestaltetes Blasformwerkzeug zur Durchführung des vorliegend beschriebenen Verfahrens. Das neuartig gestaltete Blasformwerkzeug weist eine durch zwei Werkzeugkonturen gebildete Blasformkavität auf, welche im wesentlichen der Außenkontur des herzustellenden Kunststoffhohlkörpers entspricht und zusätzlich eine umfängliche, vorzugsweise mittig zur Quetschkante angeordnete Ein- und/oder Ausstülpung aufweist.

Ein wesentlicher Vorteil des erfindungsgemäßen Verfahrens besteht in der Verwendung eines modifizierten Blasformwerkzeuges. Die erfindungsgemäße Gestaltung der Blasformkavität ist so gewählt, daß das hergestellte Blasformteil im Bereich der Werkzeugteilung bzw. der Quetschkante zusätzliche geometrische Bereiche in Form einer Ein- und/oder Ausstülpung, welche um den Kunststoffbehälter herum angeordnet ist, aufweist. Die Ein- und/oder Ausstülpung bzw. die geometrischen Bereiche sind so gestaltet, daß sich das geblasene Bauteil nach dem eigentlichen Blasformprozeß in zwei oder mehrere Teile, beispielsweise Ober- und Unterseite eines Kraftfahrzeugtankes, in einfacher Weise teilen läßt. Es ist erfindungsgemäß besonders bevorzugt, daß die Ein- und/oder Ausstülpung so gestaltet ist, daß nach dem Durchtrennen die wenigstens zwei Halbzeuge bzw. Halbschalen parallel zueinander angeordnete Flächen aufweisen, welche eine sehr einfache und sichere Verbindung der Halbzeuge erlaubt. In einer besonders bevorzugten Ausführungsform weist die Ein- und/oder Ausstülpung einen im wesentlichen rechteckigen oder U-förmigen Querschnitt auf.

Weiterhin ist es erfindungsgemäß vorgesehen, daß vor dem Verbinden der erhaltenen Halbschalen entsprechende Einbauteile in den bzw. an den Halbschalen angebracht werden. In einer bevorzugten Ausführungsform werden die durch die spezifische Modifikation des Werkzeugs entstandenen Verbindungsflächen miteinander verschweißt oder verklebt.

Ein weiterer Vorteil des Herstellungsverfahrens gemäß der vorliegenden Erfindung liegt darin, daß vor dem Verbinden der Halbzeuge gegebenenfalls Einbauten, wie etwa beispielsweise Komponenten eines Kraftstoffsystems, problemlos auf der Innenseite der Halbschalen angebracht werden können. Es ist daher erfindungsgemäß vorgesehen, daß vor dem Verschweißen der thermogeformten Halbzeuge Einbauteile, wie etwa Lüftungsleitungen für den Druckausgleich innerhalb des Tanks, Kraftstoffleitungen für den Flüssigkeitsausgleich innerhalb der des Tanks, Ventile, Schwalltöpfe, Pumpen- und/oder Tankgebermodule, an der Innenseite der Halbzeuge angebracht werden.

Das Verschweißen der Halbzeuge geschieht vorzugsweise aus der Prozeßwärme, d.h. die nach dem Blasformen schmelzeheißen Halbschalen werden direkt miteinander verschweißt.

Bei dem erfindungsgemäßen Verfahren erfolgt vorteilhafterweise vor dem Verschweißen der beiden Halbzeuge keine vollständige Abkühlung.

Ein weiterer wesentlicher Vorteil des erfindungsgemäßen Verfahrens besteht darin, daß die Wanddicke des Kunststoffvorformlings in der verwendeten Blasform- bzw. Coextrusionsblasformanlage gezielt reguliert werden kann. Die präzise Regulierung der Wanddicke des Kunststoffvorformlings führt zu einer signifikanten Verbesserung der Wanddickensteuerung bei dem anschließenden Blasformprozeß. Der Durchmesser bzw. der Umfang des Kunststoffvorformlings wird über den Düsendurchmesser des Extrusionsblaskopfes festgelegt und ist den Erfordernissen der nachfolgenden Verfahrensschritte anzupassen. Die Wanddicke des Kunststoffvorformlings kann bei der Extrusion mit Hilfe des variablen Düsenspalts in axialer Richtung reguliert werden. Bei Verwendung profilierter Düsen/Dorn-Paare oder flexibler Düsenringe, die mit geeigneten Stellelementen deformiert werden können (partielle Wanddickensteuerung) läßt sich auch eine radiale Wanddickensteuerung realisieren.

Vorteilhafterweise können bereits vorhandene Coextrusionsblasformanlagen für das erfindungsgemäße Verfahren verwendet werden. Die Blasformanlagen müßten lediglich mit entsprechenden, erfindungsgemäß gestalteten Blasformwerkzeugen ausgestattet werden.

Es ist in einer bevorzugten Ausführungsform erfindungsgemäß vorgesehen, daß für einzelne Arbeitsschritte des Verfahrens, insbesondere für das Durchtrennen des Blasformteiles und das Verbinden der resultierenden Halbzeuge Roboter eingesetzt werden.

Aufgrund der hohen Beanspruchung des Kunststoffmaterials und der hohen Anforderungen, beispielsweise hinsichtlich der Barrierewirkung, sind die nach dem erfindungsgemäßen Verfahren hergestellten Kunststoffhohlkörper vorzugsweise aus mehreren Schichten aufgebaut.

Bevorzugt sind die erfindungsgemäßen Kunststoffhohlkörper aus mindestens zwei Schichten aufgebaut. Bei diesen Schichten handelt es sich stets im eine tragende Basisschicht, welche üblicherweise die Innenoberfläche des Hohlkörpers bildet. Diese Schicht ist somit für die Dichtigkeit und mechanische Stabilität des Behälters von entscheidender Bedeutung.

In einer besonderen Ausführungsform weist das hergestellte Blasformteil mindestens eine Schicht aus polymerem Material, vorzugsweise ausgewählt aus der Gruppe umfassend Polyethylen, Polypropylen Polyvinylchlorid, Polyamid, Polyketon, Polyester und/oder Mischungen davon, auf.

In einer weiteren bevorzugten Ausführungsform ist das Blasformteil aus mehreren Schichten aufgebaut, umfassend vorzugsweise wenigstens eine Basisschicht, Mahlgutschicht, Haftvermittlerschicht und/oder Barriereschicht.

Die Schichtdickenverteilung innerhalb des Fertigteils hängt von der Anzahl der Schichten ab. Die Schichtdickenverteilung in einem nach dem erfindungsgemäßen Verfahren hergestellten Kunststoffblasformteils, welcher aus sechs Schichten aufgebaut ist, ist nachfolgend angegeben. In einer besonders bevorzugten Ausführungsform wird ein Kunststoffblasformteil bzw. ein Kunststoffhohlkörper hergestellt, der aus sechs Schichten aufgebaut ist, umfassend von außen nach innen:
eine Schicht aus HDPE mit einer Dicke von 5 bis 30 %,
eine Mahlgutschicht mit einer Dicke von 10 bis 82 %,
eine Haftvermittlerschicht mit einer Dicke von 1 bis 5 %,
eine Barriereschicht mit einer Dicke von 1 bis 10 %,
eine Haftvermittlerschicht mit einer Dicke von 1 bis 5 %,
eine Schicht aus HDPE mit einer Dicke von 10 bis 40 %,
jeweils bezogen auf die Gesamtdicke der Behälterwand.

Geeignete Basismaterialien umfassen hochdichtes Polyethylen (HDPE) mit einer Dichte von 0,940 bis 0,960 g/cm³, insbesondere 0,943 bis 0,955 g/cm³ und insbesondere bevorzugt von 0,943 bis 0,950 g/cm³. Die Schmelzfließrate der erfindungsgemäß geeigneten Polyethylenmaterialien beträgt zwischen 1,5 und 20 g/10 min (MFR (190°C/21,6kg)) insbesondere zwischen 2 und 10 g/10 min und besonders bevorzugt zwischen 3 und 8 g/ 10 min. Selbstverständlich eignen sich auch andere, bereits genannte polymere Materialien als tragendes Basismaterial.

Geeignete Barrierematerialien umfassen Ethylenvinylalkohol-Copolymerisat (EVOH), Polyamid oder auch andere Barrierepolymere wie Polyester, insbesondere Polybutylentherephthalat, Fluorpolymere, wie Polyvinylidenfluorid, Ethylen-Tetrafluoroethylen-Copolymerisat (ETFE), Tetrafluoroethylen-Hexafluoropropylen-Vinylidenfluorid-Copolymerisat (THV) sowie flüssigkristalline Polymere (LCP).

Weiterhin geeignet sind auch Mischungen der vorgenannten Barrierematerialien mit sogenannten Nanopartikeln. Nanopartikel gemäß der vorliegenden Erfindung sind anorganische Schichtsilikate deren atomare Schichten durch eingelagerte organische Moleküle aufgeweitet und damit aufgelockert sind. Durch Einarbeiten in polymere Werkstoffe können die atomaren Schichten getrennt werden, wodurch eine extrem feine Verteilung der Partikel bewirkt wird. Die Oberfläche der dispergierten Partikel bewirkt eine extreme Verlängerung des Diffusionsweges eines ggf. permeierenden Moleküls, wodurch die Permeation reduziert wird.

Erfindungsgemäß geeignete Haftvermittler umfassen polarmodifizierte Polyethylene (HDPE oder LLDPE und LDPE). Die Polarmodifizierung erfolgt üblicherweise durch Pfropfcopolymerisation mit polaren Molekülen mit C=C-Doppelbindungen, wie etwa Fumarsäure, Maleinsäure oder auch Maleinsäureanhydrid. Die gepfropften Polyethylene können in nachfolgenden Reaktionen zusätzlich chemisch modifiziert werden, beispielsweise durch Einbringung von Aminogruppen. Darüber hinaus eignen sich auch Copolymerisate des Ethylens mit Vinylacetat, Acrylsäure bzw. deren Ester prinzipiell als Haftvermittler.

Die sogenannte Mahlgutschicht wird vorzugsweise aus sogenannten Butzen erzeugt, die beispielsweise bei der Herstellung der Kunststoffhohlkörper als Restmaterialien bzw. Produktionsreste anfallen.

In einer weiteren bevorzugten Ausführungsform ist erfindungsgemäß vorgesehen, daß der Kunststoffhohlkörper nach dem Verschweißen der beiden Halbzeuge mit einer zusätzlichen permeationsmindernden Beschichtung versehen wird. Die permeationsmindernde Beschichtung kann beispielsweise mittels Direktfluorierung, Lackierung oder Plasmapolymerisation der Kunststoffbehälter erhalten werden.

Es ist vorteilhaft, das erfindungsgemäße Herstellungsverfahren an (geographisch) verschiedenen Orten durchzuführen. Das im ersten Schritt herzustellende Blasformteil kann beispielsweise in einem herkömmlichen Blasformbetrieb gefertigt werden. Vorzugsweise werden die erhaltenen Blasformteile gemäß dem zweiten Verfahrensschritt zerteilt, um sie anschließend zur Endfertigungsstelle zu transportieren, wo die erhaltenen Halbzeuge bzw. Halbschalen komplettiert und verbunden bzw. montiert werden. Die erfindungsgemäßen Verfahrensschritte erlauben in vorteilhafter Weise einen sehr platzsparenden Transport der Halbzeuge bzw. Halbschalen, da sich diese problemlos ineinanderstapeln lassen und somit teures Ladevolumen eingespart werden kann. Bei den im Stand der Technik bekannten Verfahren werden üblicherweise geschlossene Behälter mit einem hohen Volumenbedarf erhalten, welcher sich selbstverständlich nachteilig auf den Transport auswirkt.

### Beschreibung der Figuren

Figur 1 zeigt schematisch das erfindungsgemäße Blasformwerkzeug.

Figur 2 ist eine schematische Darstellung des erfindungsgemäßen Verfahrensablaufes.

Figur 3 zeigt schematisch erfindungsgemäß vorgesehene Ausgestaltungen der Ausstülpung (Draufsicht).

Figur 4 zeigt schematisch erfindungsgemäß vorgesehene Ausgestaltungen der Ausstülpung (Querschnitt).

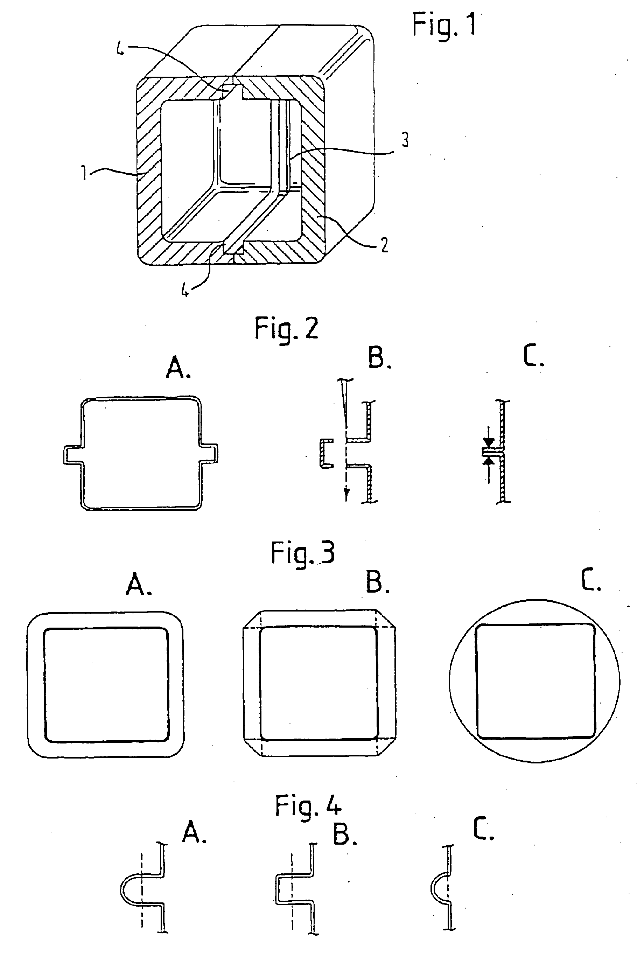

Nach Figur 1 ist die durch die zwei Werkzeugkonturen (1) und (2) gebildete Blasformkavität (3) des erfindungsgemäßen Blasformwerkzeuges so gestaltet, daß sie im wesentlichen der Außenkontur des herzustellenden Kunststoffhohlkörpers entspricht und zusätzlich eine umfängliche, vorzugsweise mittig zur Quetschkante angeordnete Ein- und/oder Ausstülpung (4) aufweist.

Figur 2 zeigt den schematischen Verfahrensablauf, umfassend die Schritte A) Blasformen, B) Durchtrennen und C) Verbinden. Es ist außerdem zu entnehmen, daß gemäß einer bevorzugten Ausführungsform der vorliegenden Erfindung die Ein- und/oder Ausstülpung einen im wesentlichen rechteckigen Querschnitt aufweist, so daß nach dem Durchtrennen parallel angeordnete Flächen bzw. eine umfängliche Flansch zur einfachen und sicheren Verbindung der Halbzeuge erhalten werden.

Bevorzugt weist die Ein- und/oder Ausstülpung (4), wie in Figur 4 dargestellt, einen im wesentlichen rechteckigen oder U-förmigen Querschnitt auf. Die gestrichelten, senkrecht zur Ein- und/oder Ausstülpung verlaufenden Linien stellen mögliche Schnittstellen dar. Die umfänglich angeordnete Ein- und/oder Ausstülpung (4) hat in einer bevorzugten Ausführungsform um den gesamten Blasformkörper herum im wesentlichen gleiche Abmessungen. In einer weiteren Ausführungsform weist die Ein- und/oder Ausstülpung (4) an den Ecken des Blasformkörpers Aussparungen auf bzw. ist die Ein- und/oder Ausstülpung an den Ecken deutlich verkürzt (Figur 3). Erfindungsgemäß weist die Ein- und/oder Ausstülpung auch nicht notwendigerweise an allen Stellen die gleiche Breite auf. Beispielsweise sind eine oder mehrere lokale Verbreiterungen der Ein- und/oder Ausstülpung (4) dann sinnvoll bzw. vorteilhaft, wenn entlang der Verbindungsnaht nach dem Verschweißen oder Verkleben eine oder mehrere Öffnungen im Kunststoffhohlkörper verbleiben sollen. Eine Verbreiterung der Ein- und/oder Ausstülpung an einer Stelle bewirkt, daß die nach dem Durchtrennen erhaltenen Halbzeuge bzw. Schnittflächen an eben dieser Stelle nicht miteinander in unmittelbaren Kontakt gebracht werden können, sondern eine Öffnung zwischen den Halbzeugen verbleibt.

Es wird ausdrücklich darauf hingewiesen, daß im folgenden das erfindungsgemäße Verfahren lediglich beispielhaft hinsichtlich der möglichen Ausführungsformen beschrieben wird. Erfindungsgemäß werden alle Ausführungsformen beansprucht, welche das erfindungsgemäße Verfahrensprinzip aufweisen.

Nach dem erfindungsgemäßen Verfahrens zur Herstellung von Kunststoffhohlkörpern wird zunächst in einer üblichen Blasform- oder Coextrusionsblasformanlage in herkömmlicher Art und Weise ein Blasformteil hergestellt. Das Prinzip der im Stand der Technik beschriebenen Blasformverfahren zum Formen von Kunststoff besteht darin, den bei hoher Temperatur geschmolzenen Kunststoff in Form eines Rohres bzw. Schlauches (Vorformling) in die Mitte einer geöffneten Form zu extrudieren, anschließend die Form zu schließen und Luft in den geschmolzenen Kunststoff einzublasen. Durch das Einblasen der Luft wird der geschmolzene Kunststoffvorformling an die Blasformwerkzeugkontur angeformt und nimmt die gleiche Gestalt wie die Werkzeugkontur an. Bei Kontakt mit der Innenwand des Werkzeugs wird der geschmolzene Kunststoff, welcher beispielsweise eine Temperatur von 200°C aufweist, abgekühlt und erstarrt nach und nach. Während man den Kunststoff erstarren läßt, wird üblicherweise ständig Luft unter hohem Druck eingeblasen.

Erfindungsgemäß wird die durch die zwei Werkzeugkonturen (1) und (2) gebildete Blasformkavität (3) so gestaltet, daß sie im wesentlichen der Außenkontur des herzustellenden Kunststoffhohlkörpers bzw. Kunststofftanks entspricht. Beispielsweise weist die Werkzeugkontur (1) die Form der oberen Hälfte eines Fahrzeugtanks auf, während die Werkzeugkontur (2) der Außenkontur der unteren Hälfte entspricht. Es ist von erfindungswesentlicher Bedeutung, daß die vorbeschriebene Blasformkavität (3) bzw. das für das erfindungsgemäße Verfahren verwendete Blasformwerkzeug zusätzlich eine umfängliche, vorzugsweise mittig zur Quetschkante angeordnete Ein- und/oder Ausstülpung (4) aufweist. Vorgenannte umfängliche Ein- und/oder Ausstülpung muß jedoch nicht notwendigerweise vollkommen gleichmäßig gestaltet sein, sondern kann beispielsweise an den Ecken des Kunststoffhohlkörpers bzw. des Blasformwerkzeugs wesentlich schmaler sein. Im Extremfall weisen die Ekken des im ersten Schritt dargestellten Kunststofftanks keine Ein- und/oder Ausstülpungen auf (siehe Figur 3).

Die Herstellung des Kunststoffvorformling kann beispielsweise in einer 6-Schicht-Coextrusionsblasformanlage, wie sie von der Firma Krupp Kautex Maschinenbau hergestellt und vertrieben wird, durchgeführt werden. Man erhält bei der Coextrusion einen schlauchförmigen, aus sechs Schichten aufgebauten Vorformling. Der Schichtaufbau des Vorformlings entspricht dem bereits beschriebenen Aufbau (von außen nach innen: HDPE, Mahlgut, Haftvermittler, Barrierepolymer, Haftvermittler, HDPE). Die Schichtdickenverteilung des Vorformlings liegt ebenfalls in den bereits angegebenen Bereichen.

Wird das Halbzeug einschichtig auf einer Blasformanlage gefertigt, so lassen sich nachträglich Barriereschichten aufbringen, beispielsweise durch Fluorierung oder Lackierung. Diese Beschichtungen werden vorzugsweise nach dem Verbinden der Halbschalen aufgebracht. Jedoch können die Beschichtungsvorgänge auch vor dem Verbinden gegebenenfalls vor oder nach der Anbringung von Einbauteilen an den Halbschalen erfolgen.

Die Vorformlingswanddicke wird bei der Coextrusion der Geometrie des Fertigteils so angepaßt, daß im Fertigteil eine möglichst homogene Wanddickenverteilung ohne Dünnstellen erzeugt wird. Die Vorformlingswanddicke wird hierbei durch ein geeignetes Programm, welches den zeitlichen Verlauf des Düsenspalts regelt (WDS), und ggf. auch durch radiale Steuerung des Düsenspalts (PWDS) reguliert. Die Wanddickenverteilung regelt sich nach den Anforderungen an das mechanische Verhalten des Materials sowie bei Kunststoffkraftstoffbehältern auch nach dem geforderten Verhalten im Brandfalle. Der Durchmesser bzw. der Umfang des Vorformlingsschlauches wird den Erfordernissen des Werkzeugs angepaßt und läßt sich problemlos über die Wahl des Düsendurchmessers festlegen.

Der Kunststoffvorformling wird bis zu einer solchen Länge extrudiert, wie sie für das jeweilige Werkzeug erforderlich ist.

Das Zerteilen des Kunststoffhohlkörpers erfolgt nach der Entnahme aus dem Blasformwerkzeug, vorzugsweise in einem automatisierten Prozeß.

Nach dem Blasformen und Zerteilen des Blasformteils werden ggf. Einbauteile in die Halbschalen montiert. Bei der Fertigung eines Kunststoffkraftstoffbehälters können beispielsweise Lüftungsleitungen für den Druckausgleich innerhalb des Tanks, Kraftstoffleitungen für den Flüssigkeitsausgleich innerhalb des Tanks, Ventile, Schwalltöpfe, Pumpen- und/oder Tankgebermodule beim Betanken in die Tankhalbschalen eingelegt und mit der noch schmelzewarmen Innenoberfläche verschweißt werden. Auch für diesen Prozeß werden vorzugsweise Roboter eingesetzt. Im letzten Fertigungsschritt werden die beiden noch in den Werkzeugen befindlichen Halbschalen aufeinandergeführt und miteinander verbunden. Dabei wird der auf den Stirnflächen der Werkzeughälften aufliegende Teil der beiden Halbzeuge miteinander in Kontakt gebracht und verschweißt.

## Patentansprüche

1. Verfahren zur Herstellung von Kunststoffhohlkörpern, welches die folgenden Schritte umfaßt:
a) Formen eines Blasformteiles in einer Blasform- und/oder Coextrusionsblasformanlage, wobei die durch zwei Werkzeugkonturen (1) und (2) gebildete Blasformkavität (3) so gestaltet ist, daß sie im wesentlichen der Außenkontur des herzustellenden Kunststoffhohlkörpers entspricht und zusätzlich eine umfängliche, vorzugsweise mittig zur Quetschkante angeordnete Ein- und/oder Ausstülpung (4) aufweist;
b) Durchtrennen der Ein- und/oder Ausstülpung unter Erhalt von wenigstens zwei Halbzeugen;
c) gegebenenfalls vor dem Verbinden der Halbzeuge zu einem Hohlkörper Anbringen von Einbauteilen an der Innenseite der Halbzeuge;
d) Verbinden der Halbzeuge zu einem Hohlkörper, gegebenenfalls durch Verschweißen oder Verkleben.

2. Verfahren nach Anspruch 1,
**dadurch gekennzeichnet, daß** die Einbauteile Lüftungsleitungen für den Druckausgleich innerhalb des Hohlkörpers, Kraftstoffleitungen für den Flüssigkeitsausgleich innerhalb des Hohlkörpers, Ventile, Schwalltöpfe, Pumpen- und/oder Tankgebermodule sind.

3. Verfahren nach einem der vorhergehenden Ansprüche,
**dadurch gekennzeichnet, daß** die Ein- und/oder Ausstülpung einen im wesentlichen rechteckigen oder U-förmigen Querschnitt aufweist, so daß nach dem Durchtrennen parallel angeordnete Flächen (eine umfängliche Flansch) zur Verbindung der Halbzeuge erhalten werden.

4. Verfahren nach einem der vorhergehenden Ansprüche,
**dadurch gekennzeichnet, daß** das Blasformteil mindestens eine Schicht aus polymeren Material aufweist, vorzugsweise ausgewählt aus der Gruppe umfassend Polyethylen, Polypropylen, Polyvinylchlorid, Polyamid, Polyketon, Polyester und/oder Mischungen davon.

5. Verfahren gemäß einem der vorhergehenden Ansprüche,
**dadurch gekennzeichnet, daß** das Blasformteil aus mehreren Schichten aufgebaut ist, umfassend vorzugsweise wenigstens eine Basisschicht, Mahlgutschicht, Haftvermittlerschicht und/oder Barriereschicht.

6. Verfahren gemäß einem der vorhergehenden Ansprüche,
**dadurch gekennzeichnet, daß** das Blasformteil aus mehreren Schichten aufgebaut ist, umfassend von außen nach innen:
- eine Schicht aus HDPE mit einer Dicke von 5 bis 30 %,
- eine Mahlgutschicht mit einer Dicke von 10 bis 82 %,
- eine Haftvermittlerschicht mit einer Dicke von 1 bis 5 %,
- eine Barriereschicht mit einer Dicke von 1 bis 10 %,
- eine Haftvermittlerschicht mit einer Dicke von 1 bis 5 %,
- eine Schicht aus HDPE mit einer Dicke von 10 bis 40 %,
jeweils bezogen auf die Gesamtdicke der Behälterwand.

7. Kunststoffhohlkörper, herstellbar nach dem Verfahren gemäß den Ansprüchen 1 bis 6.

8. Blasformwerkzeug zur Durchführung des Verfahrens nach Anspruch 1 bis 6,
**dadurch gekennzeichnet, daß** eine durch die zwei Werkzeugkonturen (1) und (2) gebildete Blasformkavität (3) so gestaltet ist, daß sie im wesentlichen der Außenkontur des herzustellenden Kunststoffhohlkörpers entspricht und zusätzlich eine umfängliche, vorzugsweise mittig zur Quetschkante angeordnete Ein- und/oder Ausstülpung (4) aufweist.

9. Verwendung eines nach dem Verfahren gemäß den Ansprüchen 1 bis 6 erhältlichen Kunststoffhohlkörpers als Kunststoffkraftstoffbehälter in Kraftfahrzeugen, als Benzinkanister, Kunststofftank zur Lagerung und zum Transport von Heizöl, Diesel und Lösemitteln, Transportbehälter auf Nutzfahrzeugen, beispielsweise für landwirtschaftliche Spritzmittel, Lösemittelbehälter, Lösungsmittelbehälter, und Kunststoffflaschen.
